# EUROPÄISCHE PATENTSCHRIFT

(11) **EP 2 711 116 B1**
(45) Veröffentlichungstag und Bekanntmachung des Hinweises auf die Patenterteilung: **16.11.2016**
(21) Anmeldenummer: 12006595.8
(22) Anmeldetag: 20.09.2012
(51) Int. Cl.: B23D 47/04

(54) **Druckbalken für eine Sägevorrichtung**
Pressure beam for a sawing device
Poutre de pression pour un dispositif de sciage

(43) Veröffentlichungstag der Anmeldung: 26.03.2014
(73) Patentinhaber: Schelling Anlagenbau GmbH, 6858 Schwarzach (AT)
(72) Erfinder: Pöschl, Wolfgang, 6844 Altach (AT)
(74) Vertreter: Fechner, Thomas

(56) Entgegenhaltungen:
- DE-B3-102007 008 174

## Beschreibung

Die vorliegende Erfindung betrifft einen Druckbalken für eine Sägevorrichtung, insbesondere Plattenaufteilanlage, wobei der Druckbalken mindestens einen, zumindest in einer Andrückrichtung und in einer zur Andrückrichtung entgegengesetzten Abheberichtung verfahrbaren Andrücksteg zum Andrücken eines zu zersägenden Werkstücks an einen Auflagetisch der Sägevorrichtung mittels einer Andrückoberfläche des Andrücksteges aufweist, wobei der Andrücksteg zumindest eine Durchführöffnung zum Hindurchführen eines Werkstückklemmers einer Werkstückvorschubeinrichtung aufweist und die Durchführöffnung mittels zumindest einer Verschlusseinrichtung zumindest teilweise verschließbar ist. Weiters betrifft die Erfindung auch eine Sägevorrichtung, insbesondere Plattenaufteilanlage, mit einem solchen Druckbalken.

Druckbalken werden bei Sägevorrichtungen dazu verwendet, die Werkstücke während des Sägevorgangs an einen Auflagetisch der Sägevorrichtung zu drücken, um einen möglichst vibrationsfreien Sägevorgang und damit sauberen Schnitt zu gewährleisten. Der oder die Andrückstege der Druckbalken können hierzu in einer Andrückrichtung auf das Werkstück bzw. den Auflagetisch zu und in einer entgegengesetzten Abheberichtung von dem Werkstück und dem Auflagetisch weg bewegt werden. Allgemein gesprochen, dienen die Druckbalken einem optimalen Festhalten des Werkstückes möglichst nah an der Sägelinie während des Sägevorgangs. Weiter ist es auch bekannt, die Druckbalken mit einer Absaugeinrichtung für Sägespäne und Sägestaub auszurüsten.

Bei den meisten Sägevorrichtungen größerer Bauart, insbesondere bei Plattenaufteilanlagen, werden die zu zersägenden Werkstücke mittels einer Werkstückvorschubeinrichtung zur Säge bzw. Sägelinie hin und gegebenenfalls auch über diese hinweg transportiert. Die Werkstückvorschubeinrichtung weist in der Regel Werkstückklemmer auf, mit welchen das Werkstück von der Werkstückvorschubeinrichtung gegriffen bzw. festgehalten wird.

Ein Problem tritt auf, wenn die Werkstückvorschubeinrichtung mit ihren Werkstückklemmern und dem daran gehaltenen Werkstück im Sinne einer optimalen Ausnutzung des Werkstückes so nah an die Sägelinie bzw. die Säge der Sägevorrichtung herangefahren werden muss, dass es bei einem Andrücken des Andrücksteges des Druckbalkens zu einer Kollision mit den Werkstückklemmern kommt. Im Sinne einer optimalen Materialausnützung des Werkstückes ist bei gattungsgemäßen Druckbalken, wie sie z.B. in der DE 10 2007 008 174 B3 gezeigt sind, zumindest eine Durchführöffnung im Andrücksteg vorgesehen, durch die der jeweilige Werkstückklemmer der Werkstückvorschubeinrichtung hindurch geführt werden kann. Dies ermöglicht es, den Andrücksteg in Andrückrichtung an das Werkstück anzudrücken, wobei das Werkstück gleichzeitig noch mittels der Werkstückklemmer an der Werkstückvorschubeinrichtung gehalten ist. Die DE 10 2007 008 174 B3 offenbart auch Verschlusseinrichtungen, mit denen die Durchführöffnungen teilweise verschließbar sind. Bei dem genannten Stand der Technik handelt es sich bei den Verschlusseinrichtungen um sogenannte Abdichteinrichtungen in Form von Bürstenvorhängen oder platten- oder lappenartigen Silikon- oder Gummielementen, die dazu dienen, die Durchführöffnung zumindest teilweise abzudichten, wenn der Werkstückklemmer aus der Durchführöffnung herausgefahren ist. Dies dient dazu, die Absaugung von Sägespänen über den Druckbalken zu verbessern.

Aufgabe der Erfindung ist es, gattungsgemäße Druckbalken dahingehend weiter zu verbessern, dass sie eine möglichst hohe Schnittqualität sicherstellen.

Dies wird erfindungsgemäß bei einem Druckbalken der oben genannten Art erreicht, indem die Verschlusseinrichtung zumindest eine Verschlusseinrichtungsandrückoberfläche zum zusätzlichen Andrücken des zu zersägenden Werkstücks an den Auflagetisch der Sägevorrichtung aufweist.

Es ist somit ein Grundgedanke der Erfindung, dass die Verschlusseinrichtung mit ihrer Verschlusseinrichtungsandrückoberfläche während des Sägevorgangs für ein zusätzliches Andrücken des zu zersägenden Werkstückes an den Auflagetisch sorgen kann. Zusätzlich kann die Verschlusseinrichtung natürlich wie beim Stand der Technik auch der Abdichtung der Durchführöffnungen im Andrücksteg dienen, wenn der oder die Werkstückklemmer aus der oder den Durchführöffnungen herausgefahren ist bzw. sind. In diesem Zusammenhang sehen bevorzugte Ausgestaltungsformen vor, dass der Druckbalken, wie an sich bekannt, eine Absaugvorrichtung aufweist, die die Absaugung von Sägespänen und Sägestaub erlaubt. In anderen Worten ist somit bevorzugt vorgesehen, dass zumindest eine Absaugvorrichtung in den Druckbalken integriert ist. Die erfindungsgemäßen Verschlusseinrichtungen können dann für einen geschlossenen bzw. zumindest weitgehend geschlossenen Absaugkanal sorgen. Vor allem wird durch die Verschlusseinrichtungsandrückoberflächen aber günstigerweise eine praktisch durchgehende Druckauflage entlang des gesamten Andrücksteges, also auch im Bereich der Durchführöffnung bzw. -öffnungen, erreicht. Hierdurch wird das Werkstück bei angedrücktem Andrücksteg und entsprechend angedrückter(n) Verschlusseinrichtungsandrückoberfläche(n) vollflächig an den Auflagetisch angedrückt, sodass ein sehr vibrationsarmer Sägevorgang möglich ist, was zu einer hohen Schnittqualität führt.

Grundsätzlich sei darauf hingewiesen, dass die Erfindung natürlich schon bei einem Andrücksteg mit nur einer Durchführöffnung anwendbar ist. In der Regel weist der Andrücksteg aber mehrere Durchführöffnungen für meist jeweils einen Werkstückklemmer auf, welche dann im Sinne der Erfindung günstigerweise jeweils von einer entsprechenden Verschlusseinrichtung mit einer entsprechenden Verschlusseinrichtungsandrückoberfläche zumindest teilweise verschließbar sind. Wie weiter unten nochmals ausgeführt, kann der Druckbalken auch zwei oder mehr Andrückstege aufweisen.

Die Andrückoberfläche des Andrücksteges ist im Bereich der jeweiligen Durchführöffnung in der Regel unterbrochen. Die Verschlusseinrichtungsandrückoberfläche der, der jeweiligen Durchführöffnung zugeordneten Verschlusseinrichtung erlaubt es, diese aufgrund der Durchführöffnung in der Andrückoberfläche des Andrücksteges vorhandene Unterbrechung zumindest teilweise, vorzugsweise praktisch vollständig, zu verschließen. Hierdurch wird auch erreicht, dass beim Sägevorgang entstehende Späne und Staub praktisch nicht auf die Werkstückoberseite gelangen und dort auch nicht dauerhaft anhaften können. In diesem Sinn ist es günstig, wenn die Andrückoberfläche des Andrücksteges und die Verschlusseinrichtungsandrückoberfläche in der jeweiligen Andrückstellung bis an die Sägelinie herangeführt sind.

Die Durchführöffnungen im Andrücksteg können torbogenartig ausgeführt sein. Zu den Werkstücken sei darauf hingewiesen, dass es sich hierbei um einzelne Werkstücke wie z.B. einzelne Platten handeln kann. Der Begriff des Werkstücks umfasst hier aber auch den Fall, bei dem mehrere Einzelwerkstücke wie z.B. ein Plattenstapel als ein Werkstück gemeinsam bzw. gleichzeitig zersägt werden. In diesem Fall umfasst der Begriff des Werkstücks somit eine Anordnung von mehreren aufeinander gestapelten oder sonst wie aneinandergelegten Einzelwerkstücken.

Bevorzugte Ausgestaltungsformen der Erfindung sehen vor, dass die Verschlusseinrichtung zwischen einer Freigabestellung, in der die Durchführöffnung für den Werkstückklemmer zumindest teilweise freigegeben ist und einer Andrückstellung, in der die Verschlusseinrichtungsandrückoberfläche an das zu zersägende Werkstück angedrückt ist, verstellbar ist. Diese Verstellung erfolgt günstigerweise mittels eines motorischen Antriebs der Verschlusseinrichtung. Hierfür sind unterschiedlichste Antriebe denkbar. Besonders bevorzugt handelt es sich um, vorzugsweise verschwenkbar gelagerte, Linearantriebe. Als Beispiel hierfür können z.B. hydraulische oder pneumatische Kolben-Zylinder-Anordnungen bzw. Druckzylinder, Spindelantriebe und dergleichen genannt werden.

Um das Werkstück bei einem Andrücken der Verschlusseinrichtungsandrückoberfläche an das Werkstück möglichst nicht zu verkratzen und auch nicht zu verschieben, sehen besonders bevorzugte Ausgestaltungsformen der Erfindung vor, dass die Verschlusseinrichtungsandrückoberfläche zwischen der Freigabestellung und der Andrückstellung eine Bewegung ausführt, welche zumindest eine parallel zur Andrückrichtung gerichtete Bewegungskomponente und/oder eine orthogonal zur Andrückrichtung gerichtete Bewegungskomponente aufweist. Hierdurch wird sichergestellt, dass die jeweilige Verschlusseinrichtungsandrückoberfläche beim Andrücken an das Werkstück nicht oder zumindest nicht in einem relevanten Ausmaß an diesem entlang schleift. Es ist zum Beispiel möglich, dass die Verschlusseinrichtungsandrückoberfläche ausschließlich eine parallel zur Andrückrichtung gerichtete Bewegung ausführt. Es sind aber auch kombinierte Bewegungen mit einer zur Andrückrichtung parallelen Bewegungskomponente und mit einer zur Andrückrichtung orthogonalen Bewegungskomponente möglich. Bei den zuletzt genannten Varianten kann z.B. vorgesehen sein, dass die Verschlusseinrichtungsandrückoberfläche an einer klappbaren und parallel zur Andrückrichtung verschiebbar geführten Schwenkplatte der Verschlusseinrichtung angeordnet ist. Um hohe Andrückkräfte in einfacher Weise realisieren zu können, sehen bevorzugte Ausgestaltungsformen der Erfindung vor, dass die Verschlusseinrichtungsandrückoberfläche mittels zumindest eines Kniehebels an dem Andrücksteg gelagert ist. Bevorzugte Ausgestaltungsformen hiervon sehen vor, dass der Kniehebel zumindest zwei mittels eines Verbindungsgelenkes gelenkig miteinander verbundene Hebel aufweist, wobei ein bzw. der motorische Antrieb zum Bewegen der Verschlusseinrichtung an dem Verbindungsgelenk angreift. Eine einfachere Alternative zum Kniehebel, insbesondere für Fälle, bei denen nur ein kleinerer Einbauraum zur Verfügung steht, ist es, wenn die Verschlusseinrichtungsandrückoberfläche mittels zumindest eines Schwenkhebels an dem Andrücksteg gelagert ist.

Wie eingangs bereits darauf hingewiesen, ist es in der Regel so, dass der Andrücksteg mehrere Durchführöffnungen zum Hindurchführen zumindest jeweils eines der Werkstückklemmer der Werkstückvorschubeinrichtung aufweist. Es kann sich auch um mehrere Werkstückeinschubvorrichtungen handeln. In Fall mehrerer Durchführöffnungen sehen konstruktiv einfache Lösungen vor, dass die Durchführöffnungen mittels zumindest jeweils einer der Verschlusseinrichtungen zumindest teilweise verschließbar sind und die Verschlusseinrichtungen, insbesondere deren Verschlusseinrichtungsandrückoberflächen, mittels eines gemeinsamen Bauteils miteinander zwangsgekoppelt sind. Diese Zwangskopplung kann z.B. als eine starre Verbindung zumindest einiger der Verschlusseinrichtungsandrückoberflächen bzw. Verschlusseinrichtungen untereinander ausgebildet sein. Das genannte gemeinsame Bauteil kann z.B. als gemeinsame Schwenkplatte ausgeführt sein. Es kann sich dabei um eine gemeinsame Schwenkplatte für alle Verschlusseinrichtungen handeln. Es ist aber alternativ im Sinne eines segmentartigen Aufbaus auch möglich, dass zwei oder mehr Schwenkplatten vorgesehen sind, die jeweils nur eine Gruppe von Verschlusseinrichtungen zwangskoppeln. Es ist auch möglich, dass den Schwenkplatten jeweils nur eine einzelne Verschlusseinrichtung zugeordnet ist.

Eingangs wurde bereits angedeutet, dass es günstig ist, wenn die Andrückoberfläche des Andrücksteges und die Verschlusseinrichtungsandrückoberfläche bzw. die Verschlusseinrichtungsandrückoberlfächen in ihrer jeweiligen Andrückstellung am Werkstück eine in sich praktisch möglichst vollständig geschlossene Oberfläche bilden. Hierzu ist bevorzugt vorgesehen, dass die Andrückoberfläche des Andrücksteges und die in der bzw. einer Andrückstellung, in der die Verschlusseinrichtungsandrückoberfläche an das zu zersägende Werkstück angedrückt ist, angeordneten Verschlusseinrichtungsandrückoberfläche(n) sich, in einer Längsrichtung des Andrücksteges gesehen, gemeinsam über zumindest 95%, vorzugsweise über zumindest 99%, einer Gesamtlängserstreckung der Andrückoberfläche des Andrücksteges erstrecken. In diesem Sinne lässt man also günstigerweise nur so viel Spaltbreite zwischen den Verschlusseinrichtungsandrückoberflächen und der Andrückoberfläche zu, wie dies die fertigungstechnischen Toleranzen fordern. Unter der Gesamtlängserstreckung des Andrücksteges ist im Zweifel die maximale Länge der Andrückoberfläche des Andrücksteges in dessen Längsrichtung zu verstehen. Die Breiten bzw. Längen der Unterbrechungen der Andrückoberfläche durch die Durchführöffnungen in dieser Längsrichtung werden dabei mitgerechnet.

Besonders bevorzugte Ausgestaltungsformen der Erfindung sehen vor, dass die Andrückoberfläche des Andrücksteges und/oder die Verschlusseinrichtungsandrückoberfläche(n), vorzugsweise jeweils, elastisch verformbare Elastomerbereiche aufweist bzw. aufweisen, mit denen sie vorzugsweise am zu zersägenden Werkstück direkt anlegbar sind. Bei den elastisch verformbaren Elastomerbereichen kann es sich z.B. um Gummifüße bzw. Gummistreifen handeln, welche an der Andrückoberfläche des Andrücksteges und/oder der oder den Verschlusseinrichtungsandrückoberflächen der Verschlusseinrichtung bzw. Verschlusseinrichtungen angebracht sind. Durch diese elastisch verformbaren Elastomerbereiche kann eine vollständig geschlossene Andrückoberfläche geschaffen werden, indem die elastisch verformbaren Elastomerbereiche in der Andrückstellung, in der die Andrückoberfläche des Andrücksteges und die Verschlusseinrichtungsandrückoberfläche(n) an das zu zersägende Werkstück angedrückt sind, eine, in einer bzw. der Längsrichtung des Andrücksteges gesehen, geschlossene Oberfläche bilden.

Erfindungsgemäße Druckbalken können nur einen einzigen Andrücksteg aufweisen. Insbesondere wenn sie mit einer Absaugung kombiniert sind bzw. eine Absaugung aufweisen, ist es aber günstig, wenn der Druckbalken zumindest einen zusätzlichen Andrücksteg aufweist, welcher vom erstgenannten Andrücksteg, vorzugsweise parallel verlaufend, distanziert angeordnet ist. Zwischen den zumindest zwei Andrückstegen kann dann eine Art Absaugkammer gebildet werden, welche durch entsprechendes Absenken der Andrückstege auf das zu zersägende Werkstück bzw. den Auflagetisch dann je nach Größe und Lage des Werkstücks eine nach außen hin teilweise oder im Wesentlichen vollständig abgedichtete Art Absaugkammer über der Sägelinie bzw. der Säge der Sägevorrichtung bilden kann. Dabei ist es günstig, wenn die Andrückstege unabhängig voreinander an das Werkstück andrückbar und von diesem abhebbar sind, insbesondere wenn sogenannte Staubschnitte an Stirnseiten des Werkstücks durchgeführt werden sollen.

Wie eingangs bereits erwähnt, betrifft die Erfindung nicht nur den Druckbalken sondern auch eine Sägevorrichtung mit einem solchen erfindungsgemäßen Druckbalken. Bei einer solchen Sägevorrichtung handelt es sich günstigerweise um eine Plattenaufteilanlage. Dies sind größere Sägeeinrichtungen, bei denen Platten bzw. Plattenstapel entlang einer oder mehrerer Sägelinien teil- oder vollautomatisch aufgeteilt bzw. zersägt werden. Bei solchen Sägeeinrichtungen ist bevorzugt vorgesehen, dass die Sägeeinrichtung zumindest eine, vorzugsweise gerade verlaufende, Sägelinie aufweist, entlang der das Werkstück zersägbar ist, und der Druckbalken zumindest einen zusätzlichen Andrücksteg aufweist, welcher vom zuerst genannten Andrücksteg, vorzugsweise parallel verlaufend, distanziert angeordnet ist und die Andrückstege, in einer Richtung orthogonal zur Sägelinie gesehen, auf einander entgegengesetzten Seiten der Sägelinie angeordnet sind. Die Sägelinie ist die Linie, an der entlang eine Sägeeinrichtung wie z.B. ein Sägeblatt bzw. insbesondere ein Kreissägeblatt verfahren werden kann, um das Werkstück zu zersägen. Dabei kann die Sägeeinrichtung, also das Kreissägeblatt oder ein anderes Sägeblatt oder eine andere Sägeeinrichtung entweder oberhalb des Auflagetisches für das Werkstück oder auch unterhalb des Auflagetisches angeordnet sein. Bei der zuletzt genannten Ausgestaltungsform spricht man häufig auch von Unterflurkreissägen. Zur Ausbildung der Sägelinie wird bei den Unterflurkreissägen in der Regel ein Sägespalt im Auflagetisch vorgesehen, entlang dem das Sägeblatt z.B. mittels eines Sägewagens verfahrbar ist. In der Regel ist das Sägeblatt bei solchen Unterflurkreissägen zumindest zum Teil über den Auflagetisch anhebbar und unter diesen absenkbar. All dies ist für sich gesehen beim Stand der Technik bekannt und kann mit der Erfindung kombiniert werden.

Bei bevorzugten Ausgestaltungsformen der Erfindung ist vorgesehen, dass der eine der Andrückstege, in der Richtung orthogonal zur Sägelinie gesehen, weiter von der Sägelinie entfernt ist als der andere Andrücksteg. Bei dem weiter entfernten Andrücksteg handelt es sich bevorzugt um den Andrücksteg mit den Durchführöffnungen.

Grundsätzlich sei darauf hingewiesen, dass bei Ausgestaltungsformen mit mehreren Andrückstegen alle, aber auch nur ein Teil der Andrückstege Durchführöffnungen und entsprechende Verschlusseinrichtungen aufweisen können. So ist es z.B. auch denkbar, dass nur der Andrücksteg, welcher, von der Werkstückvorschubeinrichtung aus gesehen, vor der Sägelinie liegt, entsprechende Durchführöffnungen und Verschlusseinrichtungen aufweist. Andere bevorzugte Ausführungsbeispiele sehen vor, dass der Andrücksteg mit den Durchführöffnungen und den entsprechenden Verschlusseinrichtungen auf der der Werkstückvorschubeinrichtung entgegengesetzten Seite der Sägelinie bzw. in der Vorwärtstransportrichtung gesehen hinter der Sägelinie angeordnet ist.

Insbesondere bei den letztgenannten Varianten kann ein Verfahren zum Betrieb einer entsprechenden erfindungsgemäßen Sägevorrichtung vorsehen, dass das an den Werkstückklemmern gehaltene Werkstück von der Werkstückvorschubeinrichtung so weit bis zur Sägelinie transportiert wird, dass die Werkstückklemmer im Bereich der Sägelinie angeordnet sind. In diesem Zustand kann dann der Andrücksteg des Druckbalkens mit geöffneten Durchführöffnungen in Andrückrichtung an das Werkstück angedrückt werden. Anschließend können die Werkstückklemmer öffnen und mittels der Werkstückvorschubeinrichtung aus dem Bereich des Druckbalkens und damit aus den Durchführöffnungen heraus transportiert werden. Anschließend werden dann die Verschlusseinrichtungsandrückoberflächen an das Werkstück angedrückt. Soweit vorhanden, kann nach dem Zurückziehen der bzw. des Werkstückklemmer(s) auch der zusätzliche Andrücksteg angedrückt werden. Soll ein Staubschnitt an der hinteren Stirnseite des Werkstückes durchgeführt werden, so kann der zweite Andrücksteg bis auf die Auflageoberfläche abgesenkt und dort angedrückt werden. Anschließend kann mittels des Sägeblattes ein Sägevorgang bzw. ein Staubschnitt entlang der Sägelinie erfolgen, wobei die Absaugeinrichtung des Druckbalkens, soweit vorhanden, dann bei diesem Staubschnitt den Staub und die Sägespäne aus dem geschlossenen Absaugkanal zwischen den beiden Andrückstegen absaugen kann. Auch hier entsteht bevorzugt eine durchgehende Druckauflage sowie ein zumindest im Wesentlichen vollständig geschlossener Absaugkanal. Hierbei kann bei bevorzugten Ausgestaltungsformen kein Staub auf die Werkstückoberseite und auf die Werkstückauflageebene gelangen und dort haften bleiben. Mit derselben Einrichtung kann natürlich auch ein Staubschnitt an der vorderen, also von der Werkstückvorschubeinrichtung abgewandten Stirnseite des Werkstücks durchgeführt werden.

Weitere Merkmale und Einzelheiten der vorliegenden Erfindung ergeben sich aus der nachfolgenden Figurenbeschreibung einer erfindungsgemäßen Ausführungsform einer Sägevorrichtung samt Druckbalken. Es zeigen:
- Fig. 1: eine Frontalansicht auf eine schematisierte Darstellung der erfindungsgemäßen Sägevorrichtung des Ausführungsbeispiels mit erfindungsgemäßem Druckbalken;
- Fig. 2: einen Vertikalschnitt entlang der Schnittlinie AA aus Fig. 1;
- Fig. 3: eine Detailansicht während eines Sägevorgangs durch das Werkstück 6;
- Fig. 4: eine entsprechende Detailansicht während der Durchführung eines Staubschnittes entlang der vorderen Stirnseite des Werkstücks;
- Fig. 5: und 6 zwei Darstellungen zur Durchführung eines Staubschnitts auf der hinteren Stirnseite des Werkstücks;
- Fig. 7: den Andrücksteg des gezeigten Ausführungsbeispiels des Druckbalkens mit den Durchführöffnungen gemäß der vorhergehenden Figuren;
- Fig. 8: die Schwenkplatte dieses Ausführungsbeispiels mit den Verschlusseinrichtungen;
- Fig. 9: eine vergrößerte Darstellung im Bereich B aus Fig. 8 und
- Fig. 10: und 11 ein weiteres erfindungsgemäßes Ausführungsbeispiel.

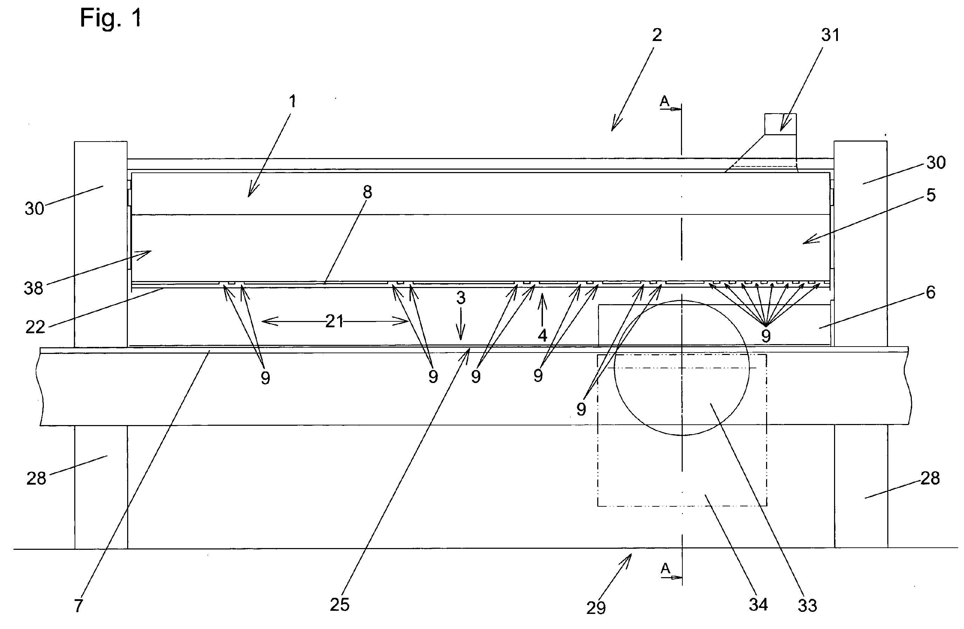

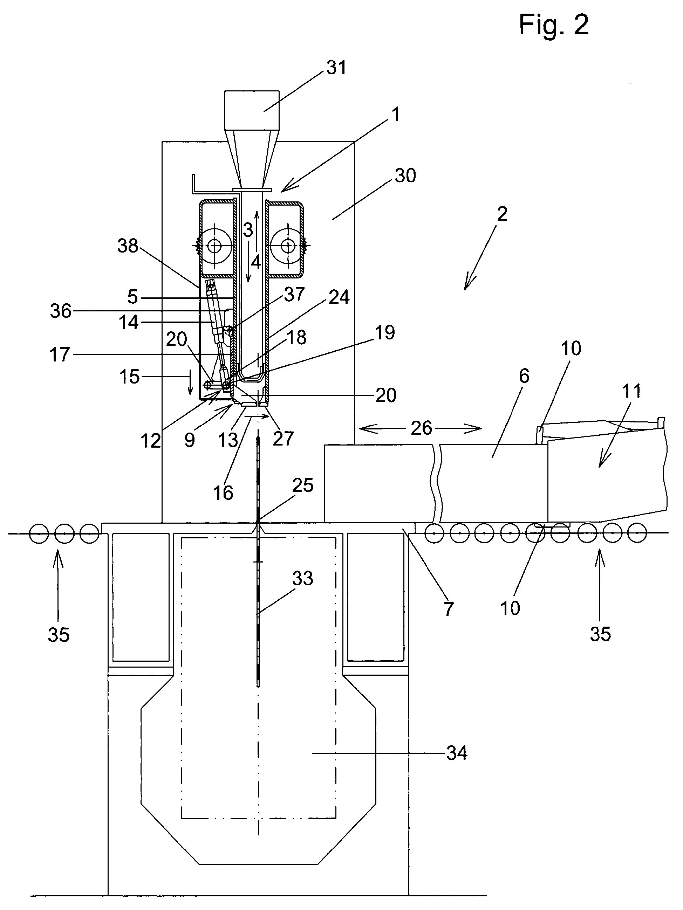

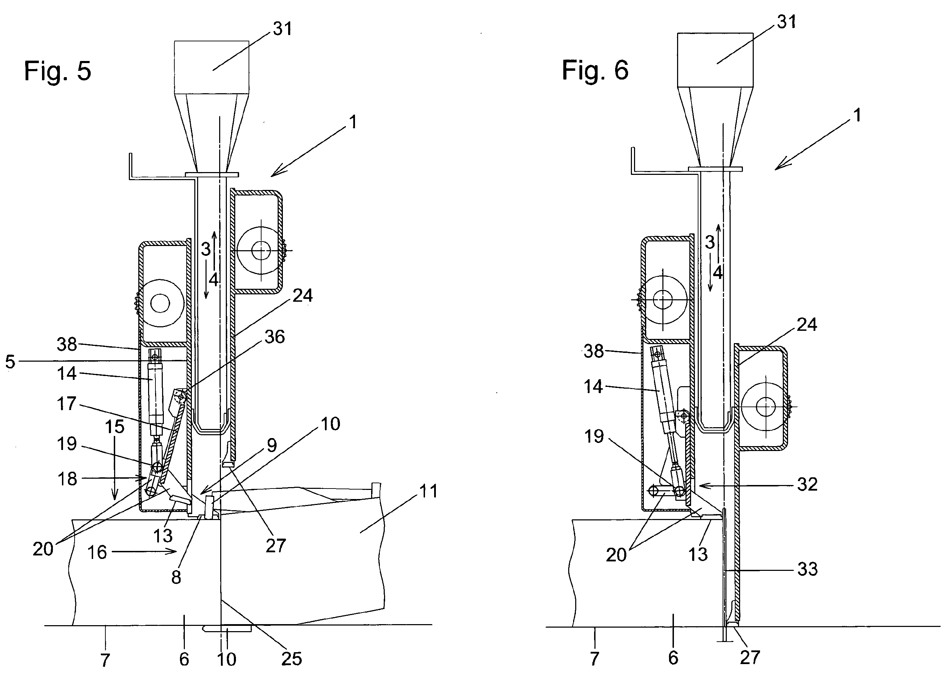

Fig. 1 zeigt eine Frontalansicht auf diese Sägevorrichtung 2, welche mit einem erfindungsgemäßen Druckbalken 1 ausgerüstet ist. Zu sehen ist eine Ansicht entgegen der Vorschubrichtung bzw. Vorwärtstransportrichtung in der das Werkstück 6 zum Zersägen zur Sägelinie 25 hin und darüber hinaus von der Sägelinie 25 z.B. nach dem Zersägen wieder weg transportiert wird. Die in Fig. 2 dargestellte Werkstückvorschubeinrichtung 11 liegt in dieser Darstellung hinter dem Druckbalken 1 und ist in Fig. 1 nicht dargestellt. Zu sehen ist in Fig. 1 zunächst einmal wie der Auflagetisch 7 für das Werkstück 6 mittels seiner Füße 28 auf dem Untergrund 29 aufgestellt ist. Oberhalb des Auflagetisches 7 befinden sich die Ständer 30, an denen der Druckbalken 1 mit seinen Andrückstegen 5 und 24 in Andrückrichtung 3 und in der entgegengesetzten Abheberichtung 4 verfahrbar gelagert ist. Der hierfür benötigten Antrieb der Andrückstege 5 und 24 sind nicht explizit dargestellt, können aber, wie beim Stand der Technik an sich bekannt, ausgeführt sein. Ebenfalls nur schematisch dargestellt ist das auf dem Auflagetisch 7 aufliegende Werkstück 6. Wie gesagt, kann es sich hierbei um einen Plattenstapel, eine Einzelplatte oder um ein sonstiges Werkstück, gegebenenfalls zusammengesetzt aus verschiedenen Einzelwerkstücken, handeln. In Andrückrichtung 3 können die Andrückstege 5 und 24 jedenfalls auf das Werkstück 6 bzw. auf den Auflagetisch 7 abgesenkt und daran angedrückt werden. Dies erfolgt, wie an sich bekannt, jeweils dann, wenn das Werkstück 6 für den nächsten Sägevorgang mittels der Werkstückvorschubeinrichtung bereits positioniert ist, aber jeweils vor dem Sägevorgang, damit die Andrückstege 5 und/oder 24 dann das Werkstück 6 an den Auflagetisch 7 andrücken, um Vibrationen während des Sägevorgangs zu vermeiden und damit eine möglichst hohe Schnittqualität zu garantieren. Durch Abheben der Andrückstege 5 bzw. 24 in Abheberichtung 4 wird das Werkstück 6 dann wieder freigegeben, sodass es von der, z.B. in den Fig. 2 und 5 dargestellten, an sich bekannten Werkstückvorschubeinrichtung 11 für den nächsten Sägevorgang positioniert oder ganz an der Sägelinie 25 vorbei transportiert werden kann.

Bei entsprechend weitem Absenken in Andrückrichtung 3 werden der Andrücksteg 5 mit seiner Andrückoberfläche 8 und der zusätzliche Andrücksteg 24 mit seiner zusätzlichen Andrückoberfläche 27 auf das Werkstück 6 bzw. den Auflagetisch 7 angedrückt. In der Ansicht gemäß Fig. 1 ist nur der Andrücksteg 5 mit seiner Andrückoberfläche 8 und seiner Rückwand 38 zu sehen. Die, die Andrückoberfläche 8 unterbrechenden Durchführöffnungen 9 des Andrücksteges 5 sind nur in ihrem unteren Bereich zu sehen. Der Rest ist von der Rückwand 38 verdeckt. Dargestellt ist auch die Gesamtlängserstreckung 22 der Andrückoberfläche 8 des Andrücksteges 5 in seiner Längsrichtung 21. Sie wird, wie bereits eingangs erläutert, über die gesamte Längserstreckung der Andrückoberfläche 8 des Andrücksteges 5 gemessen, wobei die Breiten der Durchführöffnungen 9 in der Längsrichtung 21 mitgerechnet werden.

Im rechten oberen Eck der Fig. 1 ist schematisiert ein Stück eines Absaugkamins der Absaugung 31 dargestellt. Mit ihr können aus der, bei entsprechend weit abgesenkten Andrückstegen 5 und 24 und Verschlusseinrichtungen 12 geschlossenen Absaugkammer 32 im Bereich der Sägelinie 25 Staub und Späne abgesaugt werden. In Fig. 1 sind der zusätzliche Andrücksteg 24 und seine Andrückoberfläche 27 hinter dem Andrücksteg 5 verborgen und nicht sichtbar.

Schematisiert eingezeichnet ist das hier als Kreissägeblatt ausgebildete Sägeblatt 33, mit dem das Werkstück 6 entlang der Sägelinie 25 zersägt wird. Das Sägeblatt 33 ist, wie an sich bekannt und hier nicht noch einmal im Detail ausgeführt, in die in Fig. 1 schematisiert dargestellte Arbeitsstellung über den Auflagetisch 7 anhebbar und auch unter den Auflagetisch 7 absenkbar. Mittels des Sägewagens 34 wird das Sägeblatt 33 in an sich bekannter Weise und insbesondere beim Sägevorgang entlang der Sägelinie 25 verfahren. Hierzu ist bei diesen, hier im Beispiel auch dargestellten, sogenannten Unterflurkreissägen ein entsprechender Spalt entlang der Sägelinie 25 im Auflagetisch 7 vorhanden, durch den hindurch das Sägeblatt 33 angehoben und abgesenkt, und entlang dem das Sägeblatt 33 in den Längsrichtungen 21 verfahren werden kann.

Fig. 2 zeigt nun den Schnitt entlang Schnittlinie AA aus Fig. 1. In der Darstellung gemäß Fig. 2 sind die Andrückstege 5 und 24 abgehoben. Das Sägeblatt 33 ist über den Auflagetisch 7 ausgefahren dargestellt. Zu sehen ist auch der Spalt im Auflagetisch 7 durch den das Sägeblatt 33 hindurchragt. Dieser Spalt verläuft entlang der Sägelinie 25. Man kann auch von einer Sägeebene sprechen, in der das Sägeblatt 33 angeordnet ist und in der auch die Schnitte bzw. Sägevorgänge am bzw. durch das Werkstück 6 erfolgen. Im gezeigten Ausführungsbeispiel ist der Auflagetisch 7 im Bereich um die Sägelinie 25 massiv und davor und dahinter jeweils als Rollenbahn 35 ausgebildet, wie dies an sich bekannt ist. Auf dem Auflagetisch 7 wird das zu zersägende Werkstück 6 mittels der Werkstückvorschubeinrichtung 11 in den Richtungen 26 orthogonal zur Sägelinie 25 bewegt und entsprechend für jeden Schnitt bzw. Sägevorgang positioniert. Wie an sich bekannt greift die Werkstückvorschubeinrichtung 11 das Werkstück 6 mit den Werkstückklemmern 10. Der untere Werkstückklemmer 10 ist in entsprechenden Ausnehmungen bzw. Kanälen im Auflagetisch 7 in den Richtungen 26 verschiebbar. Geeignete Werkstückklemmer 10 sind beim Stand der Technik bekannt und müssen hier nicht genauer ausgeführt werden. Sie erlauben es der Werkstückvorschubeinrichtung 11 jedenfalls, das Werkstück 6 zum Transport und zur Positionierung sicher zu greifen. Losgelassen wird das Werkstück 6 von den Werkstückklemmern in der Regel erst dann, wenn entweder am Werkstück 6 alle Sägevorgänge durchgeführt sind und/oder wenn das Werkstück 6 zumindest mittels eines der Andrückstege 5 und/oder 24 entsprechend an den Auflagetisch 7 angedrückt ist. Im gezeigten Ausführungsbeispiel entsprechen die Richtungen 26 orthogonal zur Sägelinie 25 jedenfalls den Vorschubrichtungen in denen das Werkstück 6 in der Vorwärtstransportrichtung und gegebenenfalls auch in der Gegenrichtung dazu mittels der Werkstückvorschubeinrichtung 11 zur Sägelinie 25 und von dieser weg transportiert werden können.

Gut zu sehen ist im Schnitt gemäß Fig. 2, wie auch in den nachfolgenden Schnitten, dass im gezeigten Ausführungsbeispiel auf der der Werkstückvorschubeinrichtung 11 zugewandten Seite der zusätzliche Andrücksteg 24 und auf der bezüglich der Sägelinie 25 dazu entgegengesetzten Seite der Andrücksteg 5 angeordnet sind. Beide Andrückstege 5 und 24 können unabhängig voneinander in Andrückrichtung 3 und in Abheberichtung 4 bewegt werden. Die hierfür vorgesehenen Antriebe sind beim Stand der Technik an sich bekannt und hier nicht im Detail dargestellt. Im gezeigten Ausführungsbeispiel sind die Andrückstege 5 und 24 in Richtung 26 orthogonal zur Sägelinie 25 unterschiedlich weit von der Sägelinie 25 entfernt. Der zusätzliche Andrücksteg 24 weist an seinem unteren Ende die Andrückoberfläche 27 auf, mit der er auf das Werkstück 6 oder den Auflagetisch 7 gedrückt werden kann. In der Darstellung gemäß Fig. 2 ist die Andrückoberfläche 8 des Andrücksteges 5 hinter der Verschlusseinrichtungsandrückoberfläche 13 verborgen. Zu sehen ist die Andrückoberfläche 8 in Fig. 5.

Bei besonders bevorzugten Ausgestaltungsformen wie der hier gezeigten, sind die Andrückoberflächen 8 und 27 und vorzugsweise auch die Verschlusseinrichtungsandrückoberflächen 13 in Richtung 26 orthogonal zur Sägelinie 25 gesehen so weit erstreckt, dass für das Sägeblatt 33 nur ein Spalt zwischen ihnen frei bleibt, der lediglich den Durchtritt des Sägeblattes 33 zulässt.

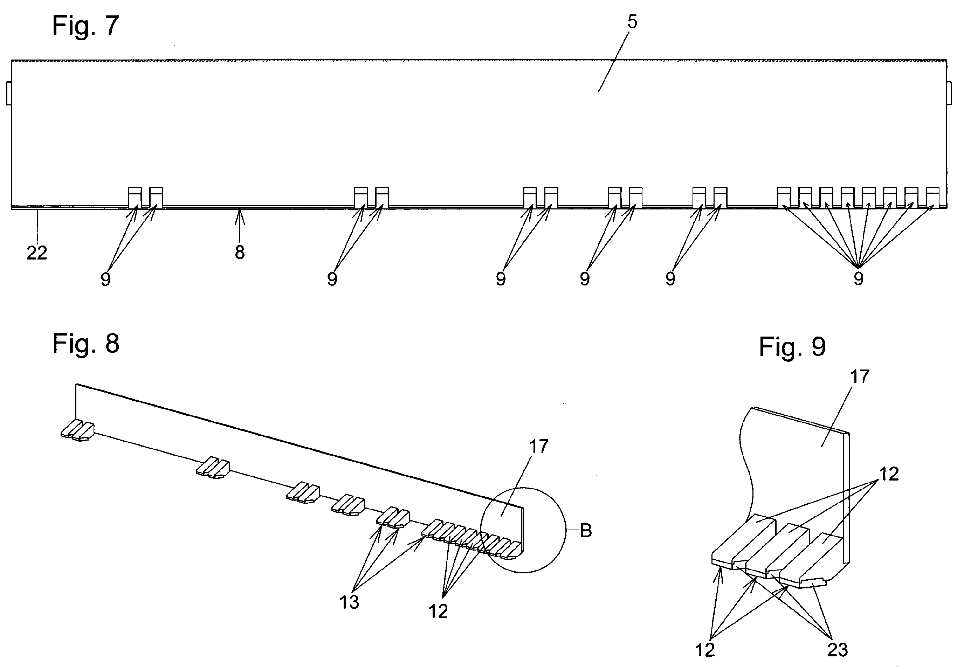

Im Schnitt gemäß Fig. 2 ist die Ausbildung der hier in diesem erfindungsgemäßen Ausführungsbeispiel realisierten Verschlusseinrichtung 12 gut zu sehen. Sie weist die Verschlusseinrichtungsandrückoberfläche 13 auf, mit der sie an das Werkstück 6 bzw. den Auflagetisch 7 angedrückt werden kann. Wie in Fig. 8 separat noch einmal dargestellt, sind bei diesem Ausführungsbeispiel die Verschlusseinrichtungen 12 für die verschiedenen Durchführöffnungen 9 an einem gemeinsamen Bauteil in Form der Schwenkplatte 17 untereinander starr verbunden angeordnet. In Fig. 2 befinden sich die Verschlusseinrichtungen 12 und die Verschlusseinrichtungsandrückoberflächen 13 in ihrer Andrückstellung, in der die Verschlusseinrichtungsandrückoberfläche 13 an das zu zersägende Werkstück 6 oder den Auflagetisch 7 angedrückt werden kann. Die Freigabestellung der Verschlusseinrichtung 12 ist in Fig. 5 dargestellt. Um die Verschlusseinrichtung und insbesondere ihre Verschlusseinrichtungsandrückoberflächen 13 zwischen Freigabe- und Andrückstellung zu bewegen, ist im gezeigten Ausführungsbeispiel, ein schwenkbar gelagerter, motorischer Antrieb 14 in Form einer Kolben-ZylinderEinheit, welche z.B. pneumatisch und hydraulisch betätigt werden kann, ausgebildet. Weiters ist zur Bewegung der Schwenkplatte 17 und damit der Verschlusseinrichtung 12 ein Kniehebel 18 vorgesehen, welcher die beiden Hebel 20 und das dazwischen angeordnete Verbindungsgelenk 19 aufweist. Der motorische Antrieb 14 greift an diesem Verbindungsgelenk 9 zwischen den beiden Hebeln 20 an. Der eine Hebel 20 ist gelenkig an dem Andrücksteg 5 gelagert. Der andere Hebel 20 trägt die jeweilige Verschlusseinrichtungsandrückoberfläche 13. Günstigerweise sind wie im hier gezeigten Ausführungsbeispiel mehrere solche motorischen Antriebe 14 über die Gesamtlängserstreckung 22 des Andrückstegs 5 verteilt vorgesehen. Die Schwenkplatte 17 und damit auch die Verschlusseinrichtungen 12 sind im gezeigten Ausführungsbeispiel verschwenkbar und parallel zur Andrückrichtung 3 bzw. Abheberichtung 4 entlang des Andrücksteges 5 verfahrbar gelagert. Im gezeigten Ausführungsbeispiel wird diese Bewegung mittels der in den Führungskulissen 36 verschiebbar gelagerten Rollen 37 geführt. Im gezeigten Ausführungsbeispiel sind die Führungskulissen 36 am Andrücksteg 5 fixiert. Die Rollen 37 befinden sich an der Schwenkplatte 17 und sind entlang der Führungskulisse 36 verfahrbar bzw. abrollbar. Der hier im Beispiel gezeigte Aufbau ermöglicht es, dass die Verschlusseinrichtungsandrückoberflächen 13 zwischen der Freigabestellung und der Andrückstellung eine Bewegung ausführen, welche zumindest eine parallel zur Andrückrichtung 3 gerichtete Komponente 15 und eine orthogonal zur Andrückrichtung 3 gerichtete Bewegungskomponente 16 aufweist. Hierdurch wird, wie eingangs erläutert, verhindert, dass beim Aufsetzen der Verschlusseinrichtungsandrückoberflächen 13 auf das Werkstück Kratzer in der Oberfläche des Werkstücks verursacht werden.

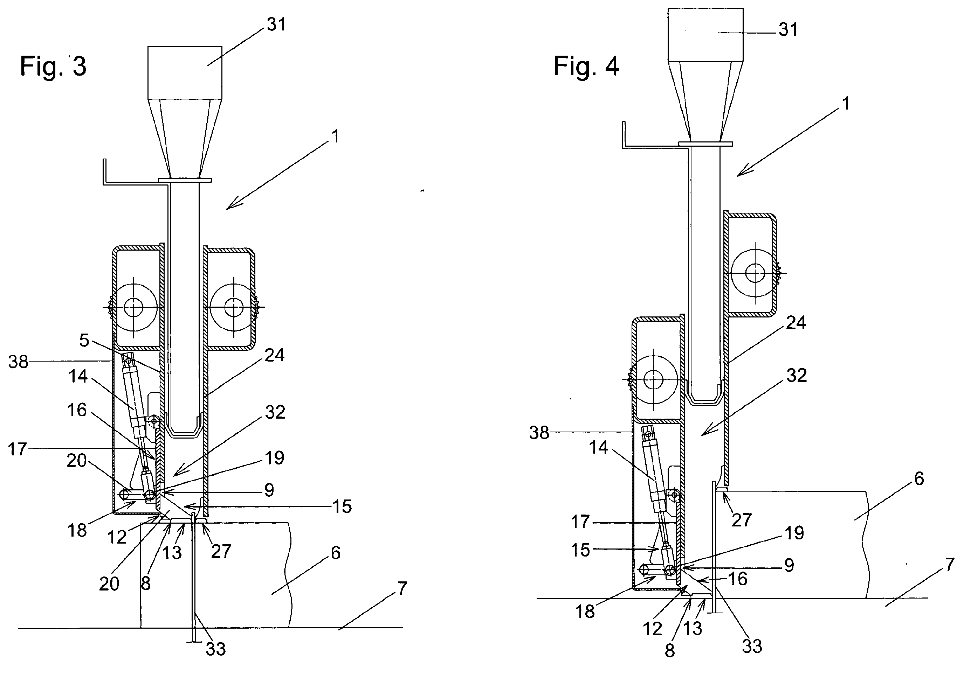

Fig. 3 zeigt nun eine erste Betriebsstellung, bei der mittels des Sägeblattes 33 ein Schnitt durch das Innere des Werkstücks 6 erfolgt. In diesem Fall sind während des Sägevorgangs sowohl der Andrücksteg 5 mit seiner Andrückoberfläche 8 als auch der zusätzliche Andrücksteg 24 mit seiner Andrückoberfläche 27 an das Werkstück 6 angedrückt. Auch die Verschlusseinrichtungen 12 mit ihren Verschlusseinrichtungsandrückoberflächen 13 befinden sich in der Andrückstellung, in der sie die Durchführöffnungen 9 auch verschließen. Hierdurch wird eine praktisch vollständig geschlossene Kammer 32 zwischen den Andrückstegen 5 und 24 geschaffen, aus der die beim Sägevorgang entstehenden Späne und der durch das Sägen hervorgerufene Staub so gut wie vollständig mittels der Absaugung 31 abgesaugt werden können. In Zusammenwirkung der Andrückoberflächen 8 und 27 sowie der Verschlusseinrichtungsandrückoberflächen 13 wird das Werkstück 6 dabei so fest an den Auflagetisch 7 angedrückt, dass Vibrationen während des Sägevorgangs nahezu vollständig unterbunden sind und ein sehr sauberer Schnitt entsteht.

Fig. 4 zeigt nun die Situation bei einem sogenannten Staubschnitt an der vorderen, also von der Werkstückvorschubeinrichtung 11 abgewandten Stirnseite des Werkstückes 6. In diesem Fall ist der Andrücksteg 5 mit seiner Andrückoberfläche 8 bis auf den Auflagetisch 7 abgesenkt, die Durchführöffnungen 9 sind wiederum durch die Verschlusseinrichtungen 12 und ihre Verschlusseinrichtungsandrückoberflächen 13 verschlossen. In diesem Fall wird das Werkstück 6 lediglich mit dem zusätzlichen Andrücksteg 24 und seiner Andrückoberfläche 27 an den Auflagetisch 7 angedrückt. Insgesamt wird wieder eine in sich so gut wie geschlossene Absaugkammer 32 gebildet, aus der beim Sägen entstehender Staub und Späne mittels der Absaugung 31 abgesaugt werden können.

Durch die Ausbildung der Verschlusseinrichtungsandrückoberflächen 13 und ihrem Zusammenwirken mit der Andrückoberfläche 8 wird entlang der Sägelinie 25, benachbart zu dieser, eine nahezu geschlossene Abdeckung des darunterliegenden Werkstückes 6 (wie in Fig. 3) bzw. Auflagetisches 7 (wie in Fig. 4) erreicht, sodass sich dort keine Späne und auch kein Staub anlagern können.

Anhand der Fig. 5 und 6 wird gezeigt, wie mit dem erfindungsgemäßen Druckbalken 1 dieses Ausführungsbeispiels ein Staubschnitt an der hinteren, also der Werkstückvorschubeinrichtung 11 zugewandten Stirnseite des Werkstücks 6 durchgeführt werden kann. Dieses Verfahren wurde bereits eingangs erläutert. Zunächst wird das Werkstück mittels der Werkstückvorschubeinrichtung 11 so weit transportiert, dass die oberen Werkstückklemmer 10 im Bereich unter den Andrückstegen 5 und 24 bzw. den Andrückoberflächen 8 und 27 zu liegen kommen. Aufgrund der Durchführöffnungen 9 im Andrücksteg 5 kann dieser in dieser Position der Werkstückklemmer 10, in der sie das Werkstück 6 noch festhalten, mit seiner Andrückoberfläche 8 bereits an das Werkstück 6 angedrückt werden, womit die Positionierung des Werkstückes 6 auf dem Auflagetisch mittels des Andrücksteges 5 gesichert ist. Beim Absenken des Andrücksteges 5 kommen die oberen Werkstückklemmer 10 in den Durchführöffnungen 9 des Andrücksteges 5 zu liegen. Nachdem der Andrücksteg 5 entsprechend angedrückt ist, können nun die Werkstückklemmer 10 gelöst und von der Werkstückvorschubeinrichtung 11 aus dem Bereich des Druckbalkens zurückgezogen werden, ohne dass die Gefahr besteht, dass das Werkstück 6 auf dem Auflagetisch 7 unbeabsichtigt verschoben wird.

Fig. 5 zeigt eine Zwischenstellung, bei der der Andrücksteg 5 mit seinen Andrückoberflächen 8 bereits auf das Werkstück 6 abgesenkt ist, die Verschlusseinrichtungen 12 die Durchführöffnungen 9 aber noch in ihrer Freigabestellung freigeben.

Nachdem die Werkstückklemmer 10 mittels der Werkstückvorschubeinrichtung 11 aus dem Bereich des Druckbalkens 1 herausgefahren sind, können die Verschlusseinrichtungen 12 entlang der Bewegungskomponenten 15 und 16 mittels des motorischen Antriebs 14 in die Andrückstellung der Verschlusseinrichtungsandrückoberflächen 13 verfahren werden. Darüber hinaus kann auch der zusätzliche Andrücksteg 24 mit seiner Andrückoberfläche 27 auf den Auflagetisch 7 abgesenkt werden. Das Endergebnis dieser Bewegungen ist in Fig. 6 gezeigt. Es ist wiederum eine, zumindest im Wesentlichen abgeschlossene Absaugkammer 32 gebildet, aus der die Absaugung beim Sägevorgang erfolgen kann. Weiters sorgen die Verschlusseinrichtungsandrückoberflächen 13 mit der Andrückoberfläche 8 des Andrücksteges 5 zusammen für ein entsprechend festes Andrücken des Werkstückes 6 an den Auflagetisch 7, sodass auch bei diesem Staubschnitt, also beim Sägevorgang entlang der Stirnseite des Werkstückes 6 dann wiederum Vibrationen entsprechend weitgehend unterbunden sind.

Fig. 7 zeigt noch einmal den Andrücksteg 5 mit seinen Durchführöffnungen 9, losgelöst von den anderen Bauteilen des Druckbalkens 1. Dargestellt ist eine Ansicht aus Richtung der Sägelinie 25 bzw. der Werkstückvorschubeinrichtung 11, also die der Rückwand 38 gegenüberliegende Frontseite des Andrücksteges 5. Fig. 8 zeigt losgelöst von den anderen Bauteilen und auch ohne die Rollen 37, die gemeinsame Schwenkplatte 17, an der die verschiedenen Verschlusseinrichtungen 12 für die verschiedenen Durchführöffnungen 9 als in sich starres, gemeinsames Bauteil angeordnet sind. Der Vollständigkeit halber sei darauf hingewiesen, dass natürlich nicht zwingend eine gemeinsame Schwenkplatte 17 vorgesehen sein muss. Die Verschlusseinrichtungen 12 können auch unabhängig voneinander und selbständig angetrieben ausgebildet sein, indem wie ansonsten in den bisher besprochenen Figuren gezeigt, jeder Verschlusseinrichtung 12 ein eigener motorischer Antrieb 14, zumindest eine eigene Führungskulisse 36 und zumindest eine eigene Rolle 37 zugeordnet ist. Natürlich können auch andere Formen des Antriebs für die Bewegung der Verschlusseinrichtungen 12 mit ihren Verschlusseinrichtungsandrückoberflächen 13 vorgesehen sein.

Fig. 9 zeigt noch das Detail B aus Fig. 8. In dieser Darstellung sind besonders gut die an den Verschlusseinrichtungsandrückoberflächen 13 vorgesehenen, elastisch verformbaren Elastomerbereiche 23 zu erkennen. Mit diesen Elastomerbereichen 23 sind die Verschlusseinrichtungsandrückoberflächen 13 direkt am zu zersägenden Werkstück bzw. am Auflagetisch 7 andrückbar. Entsprechende elastisch verformbare Elastomerbereiche 23 sind bevorzugt auch an der Andrückoberfläche 8 des Andrücksteges 5 vorgesehen, was wie eingangs erläutert, bei entsprechendem Andrücken der Andrückoberflächen 8 und der Verschlusseinrichtungsandrückoberflächen 13 am Werkstück 6 bzw. am Auflagetisch 7 zu einer in Richtung der Sägelinie 25 vollkommen geschlossenen Oberfläche führt. Entsprechende Elastomerbereiche 23 können natürlich auch an der Andrückoberfläche 27 des zusätzlichen Andrücksteges 24 vorgesehen sein.

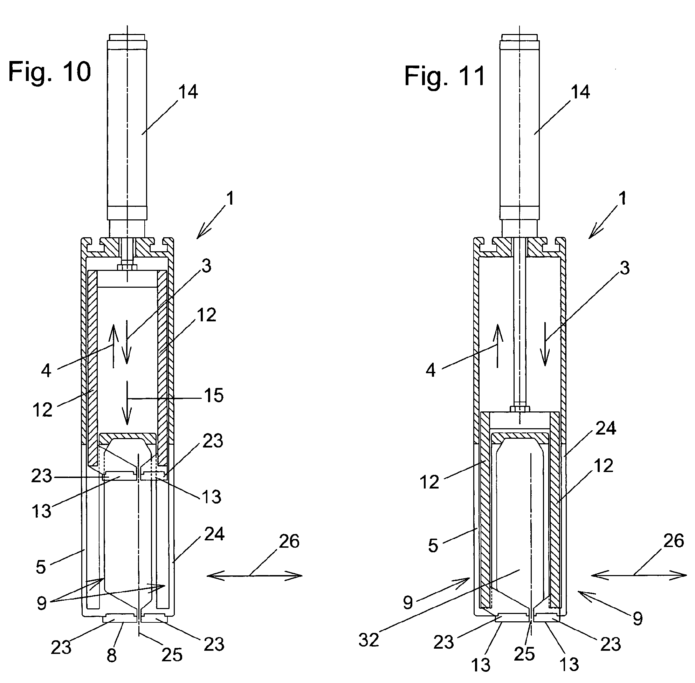

In den Fig. 10 und 11 ist ein erfindungsgemäßes Ausführungsbeispiel gezeigt, bei dem der Druckbalken 1 zwei einstückig miteinander verbundene Andrückstege 5 und 24 aufweist, die gemeinsam in Andrückrichtung 3 und Abheberichtung 4 bewegt werden. In diesem Ausführungsbeispiel sind in jedem der Andrückstege 5 und 24 Durchführöffnungen 9 vorgesehen, wobei die Durchführöffnungen in den beiden Andrückstegen 5 und 24 in den Vorschubrichtungen 26 deckungsgleich hintereinander liegen, sodass ein Werkstückklemmer 10 durch beide Durchführöffnungen 9 hindurchgeführt werden kann, sofern diese geöffnet sind, wie dies in Fig. 10 dargestellt ist. Die Fig. 10 und 11 zeigen jeweils einen Längsschnitt parallel zu den Richtungen 26 durch den Druckbalken im Bereich der Durchführöffnungen 9. Die Durchführöffnungen 9 sind erfindungsgemäß mittels der Verschlusseinrichtungen 12, welche hier ebenfalls miteinander gekoppelt sind, verschließbar. Fig. 11 zeigt den geschlossenen Zustand. Jede der Verschlusseinrichtungen 12, weist jeweils eine Verschlusseinrichtungsandrückoberfläche 13 mit einem Elastomerbereich 23 auf. In diesem Ausführungsbeispiel der Erfindung werden die Verschlusseinrichtungen 12 mit ihren Verschlusseinrichtungsandrückoberflächen 13 zwischen den in den Fig. 10 und 11 gezeigten Stellungen ausschließlich mit einer linearen Bewegungskomponente parallel zur Andrückrichtung 3 bewegt.

Weitere Ausführungsvarianten der Erfindung ergeben sich zum Beispiel durch andere Kombinationen der verschiedenen Einzelmerkmale der verschiedenen hier dargestellten Ausführungsbeispiele.

**Legende zu den Hinweisziffern:**

| | | | |
|---|---|---|---|
| 1 | Druckbalken | 28 | Fuß |
| 2 | Sägevorrichtung | 29 | Untergrund |
| 3 | Andrückrichtung | 30 | Ständer |
| 4 | Abheberichtung | 31 | Absaugung |
| 5 | Andrücksteg | 32 | Absaugkammer |
| 6 | Werkstück | 33 | Sägeblatt |
| 7 | Auflagetisch | 34 | Sägewagen |
| 8 | Andrückoberfläche | 35 | Rollenbahn |
| 9 | Durchführöffnung | 36 | Führungskulisse |
| 10 | Werkstückklemmer | 37 | Rolle |
| 11 | Werkstückvorschubeinrichtung | 38 | Rückwand |
| 12 | Verschlusseinrichtung | | |
| 13 | Verschlusseinrichtungsandrückoberfläche | | |
| 14 | motorischer Antrieb | | |
| 15 | Bewegungskomponente | | |
| 16 | Bewegungskomponente | | |
| 17 | Schwenkplatte | | |
| 18 | Kniehebel | | |
| 19 | Verbindungsgelenk | | |
| 20 | Hebel | | |
| 21 | Längsrichtung | | |
| 22 | Gesamtlängserstreckung | | |
| 23 | Elastomerbereich | | |
| 24 | zusätzlicher Andrücksteg | | |
| 25 | Sägelinie | | |
| 26 | Richtungen | | |
| 27 | Andrückoberfläche | | |

## Patentansprüche

1. Druckbalken (1) für eine Sägevorrichtung (2), insbesondere Plattenaufteilanlage, wobei der Druckbalken (1) mindestens einen, zumindest in einer Andrückrichtung (3) und in einer zur Andrückrichtung (3) entgegengesetzten Abheberichtung (4) verfahrbaren Andrücksteg (5) zum Andrücken eines zu zersägenden Werkstücks (6) an einen Auflagetisch (7) der Sägevorrichtung (2) mittels einer Andrückoberfläche (8) des Andrücksteges (5) aufweist, wobei der Andrücksteg (5) zumindest eine Durchführöffnung (9) zum Hindurchführen eines Werkstückklemmers (10) einer Werkstückvorschubeinrichtung (11) aufweist und die Durchführöffnung (9) mittels zumindest einer Verschlusseinrichtung (12) zumindest teilweise verschließbar ist, **dadurch gekennzeichnet, dass** die Verschlusseinrichtung (12) zumindest eine Verschlusseinrichtungsandrückoberfläche (13) zum zusätzlichen Andrücken des zu zersägenden Werkstücks (6) an den Auflagetisch (7) der Sägevorrichtung (2) aufweist.

2. Druckbalken (1) nach Anspruch 1, **dadurch gekennzeichnet, dass** die Verschlusseinrichtung (12) zwischen einer Freigabestellung, in der die Durchführöffnung (9)für den Werkstückklemmer (10) zumindest teilweise freigegeben ist, und einer Andrückstellung, in der die Verschlusseinrichtungsandrückoberfläche (13) an das zu zersägende Werkstück (6) angedrückt ist, vorzugsweise mittels eines motorischen Antriebs (14), verstellbar ist.

3. Druckbalken (1) nach Anspruch 2, **dadurch gekennzeichnet, dass** die Verschlusseinrichtungsandrückoberfläche (13) zwischen der Freigabestellung und der Andrückstellung eine Bewegung ausführt, welche zumindest eine parallel zur Andrückrichtung (3) gerichtete Bewegungskomponente (15) und/oder eine orthogonal zur Andrückrichtung (3) gerichtete Bewegungskomponente (16) aufweist.

4. Druckbalken (1) nach einem der Ansprüche 1 bis 3, **dadurch gekennzeichnet, dass** die Verschlusseinrichtungsandrückoberfläche (13) an zumindest einer klappbaren und parallel zur Andrückrichtung (3) verschiebbar geführten Schwenkplatte (17) der Verschlusseinrichtung (12) angeordnet ist.

5. Druckbalken (1) nach einem der Ansprüche 1 bis 4, **dadurch gekennzeichnet, dass** die Verschlusseinrichtungsandrückoberfläche (13) mittels zumindest eines Kniehebels (18) oder zumindest eines Schwenkhebels an dem Andrücksteg (5) gelagert ist.

6. Druckbalken (1) nach Anspruch 5, **dadurch gekennzeichnet, dass** der Kniehebel (18) zumindest zwei mittels eines Verbindungsgelenkes (19) gelenkig miteinander verbundene Hebel (20) aufweist, wobei ein bzw. der motorische Antrieb (14) zum Bewegen der Verschlusseinrichtung (12) an dem Verbindungsgelenk (19) angreift.

7. Druckbalken (1) nach einem der Ansprüche 1 bis 6, **dadurch gekennzeichnet, dass** der Andrücksteg (5) mehrere Durchführöffnungen (9) zum Hindurchführen zumindest jeweils eines der Werkstückklemmer (10) der Werkstückvorschubeinrichtung (11) aufweist und die Durchführöffnungen (9) mittels zumindest jeweils einer der Verschlusseinrichtungen (12) zumindest teilweise verschließbar sind, wobei zumindest einige der Verschlusseinrichtungen (12), insbesondere deren Verschlusseinrichtungsandrückoberflächen (13), mittels zumindest eines gemeinsamen Bauteils, vorzugsweise mittels zumindest einer gemeinsamen Schwenkplatte (17), miteinander zwangsgekoppelt, vorzugsweise miteinander starr verbunden, sind.

8. Druckbalken (1) nach einem der Ansprüche 1 bis 7, **dadurch gekennzeichnet, dass** die Andrückoberfläche (8) des Andrücksteges (5) und die in der bzw. einer Andrückstellung, in der die Verschlusseinrichtungsandrückoberfläche (13) an das zu zersägende Werkstück angedrückt ist, angeordnete(n) Verschlusseinrichtungsandrückoberfläche(n) (13) sich, in einer Längsrichtung (21) des Andrücksteges (5) gesehen, gemeinsam über zumindest 95%, vorzugsweise über zumindest 99%, einer Gesamtlängserstreckung (22) der Andrückoberfläche (8) des Andrücksteges (5) in der Längsrichtung (21) erstrecken.

9. Druckbalken (1) nach einem der Ansprüche 1 bis 8, **dadurch gekennzeichnet, dass** die Andrückoberfläche (8) des Andrücksteges (5) und/oder die Verschlusseinrichtungsandrückoberfläche(n) (13), vorzugsweise jeweils, elastisch verformbare Elastomerbereiche (23) aufweist bzw. aufweisen, mit denen sie vorzugsweise am zu zersägenden Werkstück (6) direkt anlegbar sind.

10. Druckbalken (1) nach Anspruch 9, **dadurch gekennzeichnet, dass** die elastisch verformbaren Elastomerbereiche (23) in der Andrückstellung, in der die Andrückoberfläche (8) des Andrücksteges (5) und die Verschlusseinrichtungsandrückoberfläche(n) (13) an das zu zersägende Werkstück (6) angedrückt sind, eine, in einer bzw. der Längsrichtung (21) des Andrücksteges (5) gesehen, geschlossene Oberfläche bilden.

11. Druckbalken (1) nach einem der Ansprüche 1 bis 10, **dadurch gekennzeichnet, dass** der Druckbalken (1) zumindest einen zusätzlichen Andrücksteg (24) aufweist, welcher vom Andrücksteg (5), vorzugsweise parallel verlaufend, distanziert angeordnet ist.

12. Druckbalken (1) nach Anspruch 11, **dadurch gekennzeichnet, dass** die Andrückstege (5) unabhängig voreinander an das Werkstück (6) andrückbar und von diesem abhebbar sind.

13. Sägevorrichtung (2), insbesondere Plattenaufteilanlage, mit einem Druckbalken (1) nach einem der Ansprüche 1 bis 12.

14. Sägevorrichtung (2) nach Anspruch 13, **dadurch gekennzeichnet, dass** die Sägeeinrichtung (2) zumindest eine, vorzugsweise gerade verlaufende, Sägelinie (25) aufweist, entlang der das Werkstück (6) zersägbar ist, und der Druckbalken (1) zumindest einen zusätzlichen Andrücksteg (24) aufweist, welcher vom Andrücksteg (5), vorzugsweise parallel verlaufend, distanziert angeordnet ist und die Andrückstege (5,24), in einer Richtung (26) orthogonal zur Sägelinie (25) gesehen, auf einander entgegengesetzten Seiten der Sägelinie (25) angeordnet sind.

15. Sägevorrichtung (2) nach Anspruch 14, **dadurch gekennzeichnet, dass** der eine der Andrückstege (5,24), vorzugsweise der Andrücksteg (5) mit den Durchführöffnungen (9), in der Richtung (26) orthogonal zur Sägelinie (25) gesehen, weiter von der Sägelinie (25) entfernt ist als der andere Andrücksteg (24).

## Claims

1. Pressure beam (1) for a sawing apparatus (2), in particular panel dividing installation, the pressure beam (1) having at least one press-on web (5), movable at least in a press-on direction (3) and in a lift-off direction (4) opposite to the press-on direction (3), for pressing a workpiece (6) to be sawn up onto a supporting table (7) of the sawing apparatus (2) by means of a press-on surface (8) of the press-on web (5), the press-on web (5) having at least one lead-through opening (9) for leading through a workpiece clamp (10) of a workpiece feed device (11) and the lead-through opening (9) being at least partly closable by means of at least one closure device (12), **characterised in that** the closure device (12) has at least one closure device press-on surface (13) for additional pressing of the workpiece (6) to be sawn up onto the supporting table (7) of the sawing apparatus (2).

2. Pressure beam (1) according to Claim 1, **characterised in that** the closure device (12) is adjustable, preferably by means of a motor drive (14), between a freeing position, in which the lead-through opening (9) for the workpiece clamp (10) is at least partly freed, and a press-on position, in which the closure device press-on surface (13) is pressed onto the workpiece (6) to be sawn up.

3. Pressure beam (1) according to Claim 2, **characterised in that** the closure device press-on surface (13), between the freeing position and the press-on position, performs a movement which has at least a movement component (15) directed parallel to the press-on direction (3) and/or a movement component (16) directed orthogonally to the press-on direction (3).

4. Pressure beam (1) according to one of Claims 1 to 3, **characterised in that** the closure device press-on surface (13) is arranged on at least one pivoting plate (17) of the closure device (12), which plate is tiltable and displaceably guided parallel to the press-on direction (3).

5. Pressure beam (1) according to one of Claims 1 to 4, **characterised in that** the closure device press-on surface (13) is mounted on the press-on web (5) by means of at least one toggle mechanism (18) or at least one pivoting lever.

6. Pressure beam (1) according to Claim 5, **characterised in that** the toggle mechanism (18) has at least two levers (20) articulatedly connected to one another by means of a connecting joint (19), a or the motor drive (14) acting on the connecting joint (19) to move the closure device (12).

7. Pressure beam (1) according to one of Claims 1 to 6, **characterised in that** the press-on web (5) has a plurality of lead-through openings (9) for leading through at least respectively one of the workpiece clamps (10) of the workpiece feed device (11) and the lead-through openings (9) are at least partly closable by means of at least respectively one of the closing devices (12), at least some of the closure devices (12), in particular their closure device press-on surfaces (13), being constrainedly coupled to one another, preferably rigidly connected to one another, by means of at least one common component, preferably by means of at least one common pivoting plate (17).

8. Pressure beam (1) according to one of Claims 1 to 7, **characterised in that** the press-on surface (8) of the press-on web (5) and the closure device press-on surface(s) (13) which is or are arranged in the or a press-on position in which the closure device press-on surface (13) is pressed onto the workpiece to be sawn up, extend, viewed in a longitudinal direction (21) of the press-on web (5), jointly over at least 95%, preferably over at least 99%, of a total longitudinal extent (22) of the press-on surface (8) of the press-on web (5) in the longitudinal direction (21).

9. Pressure beam (1) according to one of Claims 1 to 8, **characterised in that** the press-on surface (8) of the press-on web (5) and/or the closure device press-on surface(s) (13), preferably each, has or have elastically deformable elastomer regions (23), by which they can preferably be directly laid against the workpiece (6) to be sawn up.

10. Pressure beam (1) according to Claim 9, **characterised in that** the elastically deformable elastomer regions (23), in the press-on position in which the press-on surface (8) of the press-on web (5) and the closure device press-on surface(s) (13) are pressed onto the workpiece (6) to be sawn up, form a closed surface, viewed in a or the longitudinal direction (21) of the press-on web (5).

11. Pressure beam (1) according to one of Claims 1 to 10, **characterised in that** the pressure beam (1) has at least one additional press-on web (24) which is arranged at a distance, preferably parallel, from the press-on web (5).

12. Pressure beam (1) according to Claim 11, **characterised in that** the press-on webs (5) can be pressed onto, and lifted off, the workpiece (6) independently of one another.

13. Sawing apparatus (2), in particular panel dividing installation, having a pressure beam (1) according to one of Claims 1 to 12.

14. Sawing apparatus (2) according to Claim 13, **characterised in that** the sawing apparatus (2) has at least one, preferably straight, sawing line (25), along which the workpiece (6) can be sawn up, and the pressure beam (1) has at least one additional press-on web (24), which is arranged at a distance, preferably parallel, from the press-on web (5) and the press-on webs (5,24), viewed in a direction (26) orthogonal to the sawing line (25), are arranged on sides of the sawing line (25) opposite one another.

15. Sawing apparatus (2) according to Claim 14, **characterised in that** one of the press-on webs (5,24), preferably the press-on web (5) with the lead-through openings (9), is arranged further away from the sawing line (25) than the other press-on web (24), viewed in the direction (26) orthogonal to the sawing line (25).

## Revendications

1. Barre de pression (1) pour un dispositif de sciage (2), en particulier une installation de division de plaques, la barre de pression (1) comprenant au moins une barrette de pression (5) qui est mobile au moins dans une direction de pression (3) et dans une direction de levage (4) opposée à la direction de pression (3) et qui est destinée à presser une pièce (6) à scier sur une table porte-pièce (7) du dispositif de sciage (2) au moyen d'une surface de pression (8) de la barrette de pression (5), la barrette de pression (5) comprenant au moins une ouverture de passage (9) destinée à faire passer un serre-pièce (10) d'un dispositif d'avancement (11) de pièce et l'ouverture de passage (9) pouvant être fermée en partie au moyen d'au moins un dispositif de fermeture (12), **caractérisée en ce que** le dispositif de fermeture (12) comprend au moins une surface de pression (13) de dispositif de fermeture permettant une pression supplémentaire de la pièce (6) à scier sur la table porte-pièce (7) du dispositif de sciage (2).

2. Barre de pression (1) selon la revendication 1, **caractérisée en ce que** le dispositif de fermeture (12) peut être déplacé, de préférence au moyen d'un entraînement motorisé (14), entre une position de libération, dans laquelle l'ouverture de passage (9) est au moins en partie libérée pour le serre-pièce (10), et une position de pression, dans laquelle la surface de pression (13) du dispositif de fermeture est pressée contre la pièce (6) à scier.

3. Barre de pression (1) selon la revendication 2, **caractérisée en ce que** la surface de pression (13) du dispositif de fermeture, entre la position de libération et la position de pression, effectue un mouvement qui présente au moins une composante de mouvement (15) orientée parallèlement à la direction de pression (3) et/ou une composante de mouvement (16) orientée perpendiculairement à la direction de pression (3).

4. Barre de pression (1) selon l'une quelconque des revendications 1 à 3, **caractérisée en ce que** la surface de pression (13) du dispositif de fermeture est agencée sur au moins une plaque pivotante (17) du dispositif de fermeture (12) rabattable et guidée de manière à pouvoir être déplacée parallèlement à la direction de pression (3).

5. Barre de pression (1) selon l'une quelconque des revendications 1 à 4, **caractérisée en ce que** la surface de pression (13) du dispositif de fermeture est montée sur la barrette de pression (5) au moyen d'au moins un levier à genouillère (18) ou d'au moins un levier pivotant.

6. Barre de pression (1) selon la revendication 5, **caractérisée en ce que** le levier à genouillère (18) comprend au moins deux leviers (20) reliés l'un à l'autre de manière articulée au moyen d'une articulation de liaison (19), un ou l'entraînement motorisé (14) agissant sur l'articulation de liaison (19) pour déplacer le dispositif de fermeture (12).

7. Barre de pression (1) selon l'une quelconque des revendications 1 à 6, **caractérisée en ce que** la barrette de pression (5) comprend plusieurs ouvertures de passage (9) destinées à faire passer au moins respectivement un des serre-pièce (10) du dispositif d'avancement (11) de pièce et les ouvertures de passage (9) peuvent être fermées au moins en partie au moyen d'au moins respectivement un des dispositifs de fermeture (12), au moins certains des dispositifs de fermeture (12), en particulier leurs surfaces de pression (13) de dispositif de fermeture, étant couplés de force l'un à l'autre, de préférence assemblés solidement l'un à l'autre, au moyen d'au moins un élément commun, de préférence au moyen d'au moins une plaque pivotante (17) commune.

8. Barre de pression (1) selon l'une quelconque des revendications 1 à 7, **caractérisée en ce que** la surface de pression (8) de la barrette de pression (5) et la ou les surfaces de pression (13) du dispositif de fermeture agencées dans la ou une position de pression, dans laquelle la surface de pression (13) du dispositif de fermeture est pressée contre la pièce à scier, vu dans une direction longitudinale (21) de la barrette de pression (5), s'étendent conjointement sur au moins 95 %, de préférence sur au moins 99 %, d'une étendue longitudinale totale (22) de la surface de pression (8) de la barrette de pression (5) dans la direction longitudinale (21).

9. Barre de pression (1) selon l'une quelconque des revendications 1 à 8, **caractérisée en ce que** la surface de pression (8) de la barrette de pression (5) et/ou la ou les surfaces de pression (13) du dispositif de fermeture comprend ou comprennent, de préférence chacune, des zones élastomères (23) déformables élastiquement, au moyen desquelles elles peuvent de préférence être en appui direct sur la pièce (6) à scier.

10. Barre de pression (1) selon la revendication 9, **caractérisée en ce que** les zones élastomères (23) déformables élastiquement, dans la position de pression dans laquelle la surface de pression (8) de la barrette de pression (5) et la ou les surfaces de pression (13) du dispositif de fermeture sont pressées contre la pièce (6) à scier, forment une surface fermée, vu dans une ou la direction longitudinale (21) de la barrette de pression (5).

11. Barre de pression (1) selon l'une quelconque des revendications 1 à 10, **caractérisée en ce que** la barre de pression (1) comprend au moins une barrette de pression (24) supplémentaire, laquelle est agencée à distance de la barrette de pression (5), de préférence en s'étendant parallèlement à cette dernière.

12. Barre de pression (1) selon la revendication 11, **caractérisée en ce que** les barrettes de pression (5) peuvent être pressées indépendamment les unes des autres contre la pièce (6) et soulevées de cette dernière.

13. Dispositif de sciage (2), en particulier installation de division de plaques, comprenant une barre de pression (1) selon l'une quelconque des revendications 1 à 12.

14. Dispositif de sciage (2) selon la revendication 13, **caractérisé en ce que** le dispositif de sciage (2) comprend au moins une ligne de sciage (25), de préférence s'étendant de manière rectiligne, le long de laquelle la pièce (6) peut être sciée, et la barre de pression (1) comprend au moins une barrette de pression (24) supplémentaire, laquelle est agencée à distance de la barrette de pression (5), de préférence en s'étendant parallèlement à cette dernière, et les barrettes de pression (5, 24), vu dans une direction (26) perpendiculaire à la ligne de sciage (25), sont agencées sur des faces opposées l'une à l'autre de la ligne de sciage (25).

15. Dispositif de sciage (2) selon la revendication 14, **caractérisé en ce que** l'une des barrettes de pression (5, 24), de préférence la barrette de pression (5) présentant les ouvertures de passage (9), vu dans la direction (26) perpendiculaire à la ligne de sciage (25), est plus éloignée de la ligne de sciage (25) que l'autre barrette de pression (24).
